# EUROPÄISCHE PATENTSCHRIFT

(11) **EP 0 615 478 B1**
(45) Veröffentlichungstag und Bekanntmachung des Hinweises auf die Patenterteilung: **05.03.1997**
(21) Anmeldenummer: 92923779.0
(22) Anmeldetag: 24.11.1992
(51) Int. Cl.: B23B 29/20, B23B 31/10, B23Q 3/12

(54) **WERKZEUGKUPPLUNG, DIE EINE RADIAL ELASTISCH AUFSPREIZBARE ANSCHLUSSHÜLSE UND EINEN SCHAFT MIT EINEM SPANNKÖRPER AUFWEIST**
TOOL COUPLING WITH A RADIALLY ELASTICALLY EXPANDABLE COUPLING SLEEVE AND A SHAFT WITH A CLAMPING BODY
DISPOSITIF D'ACCOUPLEMENT POUR OUTILS, PRESENTANT UN MANCHON DE RACCORDEMENT POUVANT ETRE ELARGI RADIALEMENT DE MANIERE ELASTIQUE, AINSI QU'UNE TIGE AVEC UN ELEMENT DE SERRAGE

(30) Priorität: 03.12.1991 DE 4139795
(43) Veröffentlichungstag der Anmeldung: 21.09.1994
(73) Patentinhaber: KOMET Präzisionswerkzeuge Robert Breuning GmbH, D-74354 Besigheim (DE)
(72) Erfinder: SCHEER, Gerhard, D-7121 Löchgau (DE)
(74) Vertreter: Wolf, Eckhard, Dr.-Ing.
(86) Internationale Anmeldenummer: EP9202701
(87) Internationale Veröffentlichungsnummer: WO9310930

(56) Entgegenhaltungen:
- EP-A- 0 162 824
- EP-A- 0 235 511
- EP-A- 0 303 346
- WO-A-91/03347
- US-A- 4 135 848
- US-A- 4 292 866
- US-A- 4 680 999

## Beschreibung

Die Erfindung betrifft eine Vorrichtung zur Verbindung zweier Werkzeugteile der im Oberbegriff des Patentanspruchs 1 angegebenen Gattung.

Die erfindungsgemäße Verbindungsvorrichtung ist sowohl zur lösbaren Kupplung von Werkzeugen mit einer Maschinenspindel (Schnittstelle) als auch zur Verbindung von Werkzeugteilen untereinander (Trennstelle) bestimmt. Unter "Werkzeugteilen" sollen solche Bauteile verstanden werden, die entweder einen Schaft mit Ringflansch oder eine Anschlußhülse mit Ausnehmung und Stirnfläche enthalten, also insbesondere Werkzeugköpfe, Verlängerungs- und Reduzierstücke, Verstellköpfe, Spindelvorsatzflansche und Maschinenspindeln.

Eine Vorrichtung zur Verbindung zweier Werkzeugteile der eingangs angegebenen Art ist beispielsweise aus der US-A 4 292 866 bekannt. Der Spannkörper ist dort als lose Massivkugel oder als an ein Schraubteil angeformte Halbkugel ausgebildet, so daß nur eine Axialbetätigung von außen her durch das erste Werkzeugteil hindurch möglich ist. Der Schaft ist an Schlitzen vierfach unter Bildung von Federzungen, die nach außen gespreizt werden können, geteilt.

Weiter sind Kupplungsvorrichtungen für Werkzeugteile bekannt (WO 91/03347), bei denen ein in einer Querbohrung des Zapfens verschiebbar angeordneter, an seinen Enden einen Innen- bzw. Außenkonus aufweisender, ein- oder mehrteiliger Klemmbolzen sowie zwei in einander diametral gegenüberliegenden Innengewinden der Anschlußhülse geführte, einen nach dem Hülseninneren weisenden Außen- bzw. Innenkonus aufweisende, beim Spannvorgang mit dem Klemmbolzen verspannbare Halteschrauben vorgesehen sind, wobei der Klemmbolzen und die Halteschrauben einen beim Spannvorgang den Einzug des Zapfens in die Ausnehmung und das gegenseitige Anpressen der Ringfläche und der Stirnfläche bewirkenden Achsversatz aufweisen. Der Spannvorgang wird bei diesen Vorrichtungen beispielsweise durch Eindrehen der mit dem Außenkonus versehenen Halteschraube (Spannschraube) ausgelöst. Kommt es beim Eindrehen der Spannschraube zur Anlage, so treten die über die Schraube eingeleiteten Kräfte zunächst spannschraubenseitig am Klemmbolzen auf. Der Klemmbolzen wird dabei zuerst spannschraubenseitig gegen den dem Schaftende zugewandten Querbohrungsgrund so angedrückt, daß der Schaft in die Ausnehmung eingezogen wird. Unmittelbar danach geschieht dies auch beim Auflaufen des Klemmbolzen-Außenkonus auf dem Innenkonus der gegenüberliegenden Halteschraube. Sobald eine gewisse Spannwirkung eingetreten ist, erfolgt eine vollständige Umsetzung der Radialkräfte in eine die Ringfläche des Paßzapfens und die Stirnfläche der Anschlußhülse gegeneinanderpressende Axialkomponente. Durch diese Art der Verspannung ergibt sich bevorzugt eine Aussteifung der Verbindungsvorrichtung in Richtung des Pendelbolzens.

Außerdem ist es bei einer Kupplungsvorrichtung für Werkzeugteile an sich bekannt (WO 91/03347), den Klemmbolzen zweiteilig auszubilden und den Spannvorgang durch einen zwischen den beiden Klemmbolzenteilen angeordneten, über eine maschinenseitig angeordnete Einzugvorrichtung axial betätigbaren Ziehkeil auszulösen. Auch dort kommt es beim Spannvorgang zu einer Verspannung der mit einem Außenkonus versehenen Klemmbolzen und der in einem Innengewinde der Anschlußhülse angeordneten, mit einem Innenkonus versehenen Halteschrauben. Die Aussteifung der Verbindungsvorrichtung erfolgt auch hier bevorzugt in Richtung der Klemmbolzen.

Um die Biegesteifigkeit quer zur Klemmbolzenachse zu erhöhen und zudem die Wechselgenauigkeit und das Dämpfungsverhalten zu verbessern, wird dort außerdem die Erzeugung einer Vierpunktanlage zwischen Schaft und Ausnehmung in zwei zueinander senkrechten Richtungen vorgeschlagen. Um dies zu erreichen, wird die Anschlußhülse beim Spannvorgang in Achsrichtung des Klemmbolzens so elastisch aufgeweitet, daß sie in Querrichtung hierzu unter elastischer Durchmesserverringerung in einander diametral gegenüberliegenden Bereichen mit der Innenfläche der Ausnehmung gegen die Oberfläche des Schafts angepreßt wird. Bei geeigneter Wahl der Wandstärke und der Außen- und Innentoleranzen des Schafts und der Anschlußhülse erhält man dadurch die erwünschte Vierpunktanlage. Eine weitere Verbesserung in dieser Hinsicht wird dadurch erzielt, daß die im Schaft befindliche Querbohrung im Bereich ihres dem Zapfenende zugewandten Grundes mit einer an ihren Längsränder eine Anlage für den eingespannten Klemmbolzen bildende Vertiefung versehen wird, die zu einer gewissen Ausbauchung des Schafts und damit zu einer Überbrückung des Passungsspiels quer zur Querbolzenrichtung führt. Dieser Effekt wird dadurch noch verstärkt, daß der Schaft mindestens einen sich über die Querbohrungslänge erstreckenden, zum Inneren der Querbohrung offenen schlitzförmigen Einschnitt aufweist. Der Einschnitt führt beim Spannvorgang zu einer Aufspreizung der Querbohrung und damit zu einer größeren Aufbauchung des Paßzapfens und zur angestrebten selbstzentrierenden Vierpunktanlage.

Ausgehend hiervon liegt der Erfindung die Aufgabe zugrunde, die bekannte Kupplungsvorrichtung der eingangs angegebenen Art dahingehend zu verbessern, daß der Schaft und die Anschlußhülse mit einfachen Mitteln über eine möglichst große Umfassungsfläche selbstzentrierend zueinander spielfrei gestellt werden.

Zur Lösung dieser Aufgabe wird die im Patentanspruch 1 angegebene Merkmalskombination vorgeschlagen. Weitere vorteilhafte Ausgestaltungen und Weiterbildungen der Erfindung ergeben sich den abhängigen Ansprüchen.

Die Erfindung geht von der Erkenntnis aus, daß die Wandung eines relativ dünnwandigen Hohlschafts sich durch eine entsprechende Spreizkraftverteilung im Hohlrauminneren sowohl ausbauchen als auch in seiner Außenkrümmung in Anpassung an die Ausnehmungskrümmung verändern läßt, so daß sich ein größerer Anpreßbereich in Umfangsrichtung ergibt.

Um dies zu erreichen, wird gemäß der Erfindung vorgeschlagen, daß der Schaft im Bereich des Hohlraums ein Innengewinde und der Spannkörper ein in das Innengewinde des Schafts eingedrehtes Außengewinde aufweisen, und daß die Innenschulter des Schafts und die gegen die Innenschulter anliegende Spannfläche des Spannkörpers durch gegeneinander anliegende, schräg zum stirnseitigen Schaftende weisende Flanken des Innen- bzw. Außengewindes gebildet sind. Diese Maßnahme hat den Vorteil, daß die Schrägfläche, die zur Aufspreizung notwendig ist, an eine beliebige Stelle innerhalb des Hohlschafts gelegt werden kann.

Der Spannkörper mit seinem Außengewinde ist vorteilhafterweise im wesentlichen spannungsfrei oder lose in das Innengewinde des Schafts eingedreht und in diesem mittels eines Drehsicherungsglieds gegen ein Verdrehen formschlüssig gesichert.

Eine bevorzugte Ausgestaltung der Erfindung sieht vor, daß der Spannkörper und die Hohlraumwand miteinander fluchtende Querbohrungen aufweisen, daß in den Querbohrungen ein an seinen Enden einen Innen- bzw. Außenkonus aufweisender, ein- oder mehrteiliger Klemmbolzen verschiebbar angeordnet ist, daß die Anschlußhülse mit zwei in einander diametral gegenüberliegenden Innengewinden geführten, einen nach dem Hülseninneren weisenden, dem Innen- bzw. Außenkonus des Klemmbolzens zugeordneten Außen- bzw. Innenkonus aufweisenden, beim Spannvorgang mit dem Klemmbolzen verspannbaren Halteschrauben versehen ist und daß der Klemmbolzen und die Halteschrauben einen beim Spannvorgang den Einzug des Schafts in die Ausnehmung und das gegenseitige Anpressen der Ringfläche und der Stirnfläche bewirkenden Achsversatz aufweisen.

Um eine für den Spannvorgang ausreichende Verschiebebewegung des Spannkörpers innerhalb des Hohlschaftes zu gewährleisten, weist die Querbohrung im Spannkörper einen kleineren Durchmesser als die Querbohrungen in der Hohlraumwand auf. Aus demselben Grund können die Querbohrungen auch als in Achsrichtung des Schafts langgestreckte Langlöcher ausgebildet sein.

Bei einteiligem Klemmbolzen wird der Spannvorgang zweckmäßig in der eingangs beschriebenen Weise durch radiales Eindrehen einer der beiden Halteschrauben (Spannschraube) ausgelöst.

Grundsätzlich ist es gemäß einer vorteilhaften Ausgestaltung der Erfindung auch möglich, daß der Klemmbolzen zwei in der Querbohrung des Spannkörpers einander diametral gegenüberliegende und durch die Querbohrungen in der Hohlraumwandung hindurchgreifende Klemmbolzenteile sowie einen zwischen den Klemmbolzenteilen angeordneten axial verschiebbaren Ziehkeil aufweist, welch letzterer axial durch den Spannkörper und mit einem Anzugbolzen durch eine stirnseitige Schaftöffnung hindurchgreift und mit Keilflächen gegen komplementäre Keilflächen der Klemmbolzenteile anliegt.

Das Drehsicherungsglied kann entweder durch den durch die Querbohrungen hindurchgreifenden Klemmbolzen oder durch einen radial in die Hohlraumwand eingedrehten und mit seiner Spitze in eine Ausnehmung des Spannkörpers eingreifenden Gewindestift gebildet werden.

Eine andere Lösungsvariante mit axialer Auslösung des Spannvorgangs sieht vor, daß der Spannkörper einen durch eine stirnseitige Schaftöffnung hindurchgreifenden und axial über diese überstehenden Anzugbolzen trägt, der durch eine maschinenseitig angeordnete Einzugvorrichtung erfaßt und axial in die Aufnahmehülse eingezogen werden kann. Der Anzugbolzen kann dabei stirnseitig mit dem Spannkörper verschraubt sein oder mit einem in einer konischen Ausnehmung des Spannkörpers abgestützten Keil oder Konus versehen sein. Der Spannkörper kann hierzu einteilig, teilweise achsparallel geschlitzt oder mehrteilig segmentförmig gestaltet sein, um beim Anziehen des Anzugbolzens aufgespreizt werden zu können. Bei segmentförmiger Gestaltung kann der Spannkörper durch einen Sprengring zusammengehalten werden.

Eine weitere bevorzugte Ausgestaltung der Erfindung sieht vor, daß der einen im Querschnitt langgestreckten Umriß aufweisende Spannkörper durch die im Umriß entsprechend langgestreckte stirnseitige Schaftöffnung in den Hohlraum einführbar und durch Drehen um ca. 90° innerhalb des Hohlraums formschlüssig verriegelbar ist.

Das Innen- und Außengewinde können beispielsweise als Spitzgewinde, Trapezgewinde, Sägegewinde oder Rundgewinde ausgebildet werden, die in ihrer Steigung, ihrem Flankenwinkel und der Anzahl ihrer Gewindegänge zur Erzielung einer möglichst günstigen Aufbauch- oder Aufspreizwirkung optimiert werden können. Eine weitere Verbesserung in dieser Hinsicht kann dadurch erzielt werden, daß der Hohlschaft an gezielten Stellen im Bereich seiner Wandung beispielsweise durch eine radiale Ausnehmung oder Freidrehung geschwächt wird. Die Ausnehmung oder Freidrehung wird dabei zweckmäßig im Hohlrauminneren vorzugsweise in der Nähe der Schaftwurzel angeordnet.

Um den Spannkörper einfach in den Hohlraum des Hohlschafts einsetzen zu können, ist der Hohlraum zweckmäßig über eine stirnseitige Schaftöffnung von außen zugänglich. Die Schaftöffnung kann durch einen Schaftdeckel verschlossen werden, der zu diesem Zweck mit einem Außengewinde in das bis zur Schaftöffnung reichende Innengewinde des Schafts eingedreht und mit einer ebenen oder konischen Ringschulter gegen eine ringförmige Stirnfläche oder eine Kegelsenkung des Schafts angepreßt werden kann. Der Schaftdeckel ist zu diesem Zweck vorteilhafterweise mit einem axialen Stufenansatz versehen, der in eine entsprechende axiale Stufenbohrung des Schafts eingreift. Der Schaftdeckel oder der Schaft kann mit einem Umfangswulst versehen werden, dessen Außendurchmesser geringfügig kleiner als der Schaftdurchmesser in der Nähe der Schaftwurzel ist und zugleich eine Einführrille für den Schaft begrenzt. Dazu weist der zylindrische Schaft zweckmäßig eine sich zur ringförmigen Stirnfläche hin konisch verjüngende Schaftspitze auf, während der Außendurchmesser des Schaftdeckels oder des Schafts im Bereich des Umfangswulsts etwas größer als der Schaftdurchmesser im Bereich der Stirnfläche ist.

Zur Einstellung einer definierten Spreizwirkung kann es außerdem von Vorteil sein, wenn das Außengewinde des Spannkörpers vorzugsweise an seinem der Schaftstirnseite zugewandten Ende teilweise oder abschnittsweise freigedreht ist. Der Spannkörper kann ferner an seinem stirnseitigen Ende mit einem Formelement für den Ansatz eines Schraubenschlüssels oder -drehers versehen werden. Weiter kann der Spannkörper an seinem stirnseitigen Ende mit einem axial überstehenden Ansatz für den Eingriff in eine entsprechende Ausnehmung am Schaftdeckel versehen werden.

Eine weitere vorteilhafte Ausgestaltung der Erfindung sieht vor, daß der Spannkörper eine axial durchgehende Bohrung für ein Kühlmittel oder ein Kühlmittelrohr aufweist. Insbesondere kann durch den Spannkörper und gegebenenfalls durch den Klemmbolzen ein Kühlmittelrohr hindurchgeführt werden, das auf der einen Seite sich zu einer Bohrung des Schaftdeckels hin öffnet und auf der anderen Seite in eine Öffnung im wurzelseitigen Hohlraumboden eindringt. Das Kühlmittelrohr kann entweder am Deckel angeformt sein oder durch diesen als Einzelteil dichtend gehalten werden. Weiter kann der Schaftdeckel zur besseren Abdichtung auf seiner Außenseite mit einer ringförmigen Vertiefung oder Eindrehung versehen werden, in die eine im Inneren der Anschlußhülse eingelegte Dichtung mit entsprechendem Profil eingreift.

Um das Aufbauchen der Hohlraumwandung zu erleichtern, kann der Schaft zusätzlich mit mindestens einem zur Querbohrung in der Hohlraumwandung hin offenen Wandschlitz versehen werden, der von der Querbohrung aus parallel oder schräg zur Schaftachse in Richtung freies Schaftende und/oder in Richtung Ringfläche verlaufen kann und zweckmäßig zum freien Schaftende bzw. zur Ringfläche hin geschlossen ist. Eine weitere Verbesserung des Aufspreizverhaltens kann dadurch erzielt werden, daß der Schaft in seiner Hohlraumwandung mindestens zwei einander paarweise diametral gegenüberliegende, zum stirnseitigen Ende hin randoffene Aussparungen aufweist, die gegebenenfalls auch zur Drehmitnahme verwendet werden können.

Im praktischen Einsatz hat es sich jedoch als besonders vorteilhaft erwiesen, wenn die einander zugewandten Ring- und Stirnflächen zueinander komplementäre Nuten und Nutensteine zur formschlüssigen Drehmitnahme aufweisen.

Eine bevorzugte Ausgestaltung der Erfindung sieht vor, daß der Schaft eine zylindrische Mantelfläche und die Anschlußhülse eine passende zylindrische Ausnehmung aufweist.

Grundsätzlich ist es jedoch auch möglich, daß der Schaft eine zum freien Schaftende hin konvergierende kegelförmige Mantelfläche und die Anschlußhülse eine komplementäre kegelförmige Ausnehmung aufweist. Der kegelförmige Hohlschaft kann dabei so bemessen werden, daß es beim Fügen der Verbindung bereits ohne Kraftaufwendung zu einem Anschlag der Planflächen kommt und daß die radiale Verspannung erst mit der Axialverspannung erfolgt.

Zum Lösen der Verbindung bedarf es dann keines zusätzlichen Auswerfers mehr. Weiter ist es gemäß der Erfindung möglich, daß der Schaft eine doppelzylindrische Außenfläche mit stirnseitig kleinerem und ringflächenseitig größerem Durchmesser und die Anschlußhülse eine komplementäre doppelzylindrische Ausnehmung mit stirnseitig größerem und rückseitig kleinerem Durchmesser aufweist.

Im folgenden wird die Erfindung anhand einiger in der Zeichnung schematisch dargestellter Ausführungsbeispiele näher erläutert. Es zeigen
- Fig. 1: eine teilweise geschnittene Seitenansicht einer Werkzeugkupplung mit zylindrischem Hohlschaft, einteiligem Klemmbolzen und Gewindespannkörper;
- Fig. 2: eine gegenüber Fig. 1 um 90° gedrehte, teilweise geschnittene Seitenansicht des den Hohlschaft aufweisenden Werkzeugteils;
- Fig. 3a und b: zwei Ausführungsformen eines Hohlschaftdeckels in teilweise geschnittener Darstellung;
- Fig. 4a bis d: Darstellungen entsprechend Fig. 1 bis 3 für ein hinsichtlich des Schaftdeckels abgewandeltes Ausführungsbeispiel einer Werkzeugkupplung;
- Fig. 5a: eine teilweise geschnittene Seitenansicht einer Werkzeugkupplung mit axial betätigbarem Anzugbolzen und Gewindespannkörper;
- Fig. 5b: ein gegenüber Fig. 5a abgewandeltes Ausführungsbeispiel einer Werkzeugkupplung mit in den Gewindespannkörper eingeschraubtem Anzugbolzen;
- Fig. 5c und d: ein weiteres abgewandeltes Ausführungsbeispiel einer Werkzeugkupplung mit axial betätigbaren sich in Anzugrichtung mit einem Konus am Gewindespannkörper abstützenden Anzugbolzen in teilweise längs- und quergeschnittener Darstellung;
- Fig. 6: eine teilweise geschnittene Seitenansicht einer Werkzeugkupplung mit zweiteiligem Klemmbolzen, Ziehkeil und Gewindespannkörper.

Die in der Zeichnung dargestellten Verbindungsvorrichtungen dienen sowohl zur lösbaren Kupplung von Werkzeugen an einer Maschinenspindel (Schnittstelle) als auch zur Verbindung von Werkzeugteilen untereinander (Trennstelle).

Die Werkzeugkupplungen bestehen im wesentlichen aus einem am ersten Werkzeugteil 10 axial überstehenden Schaft 12, einer an einem zweiten Werkzeugteil 14 axial überstehenden Anschlußhülse 16 und einem Spannmechanismus zum Einziehen des Schafts in eine Ausnehmung 18 der Anschlußhülse 16 sowie zur Erzeugung einer Planflächenverspannung zwischen einer den Schaft 12 umgebenden Ringfläche 20 des ersten Werkzeugsteils 10 und einer ringförmigen Stirnfläche 22 des zweiten Werkzeugteils 14. Der als Hohlschaft ausgebildete Schaft 12 weist einen zum stirnseitigen Schaftende hin offenen Hohlraum 24 auf, in welchem ein einen Bestandteil des Spannmechanismus bildender Spannkörper 28 angeordnet ist. Beim Spannvorgang wird der Spannkörper 28 mit einer Spannfläche 30 axial gegen eine schräge Innenschulter 26 des Hohlschafts 12 angepreßt. Die Hohlraumwand ist dabei so ausgebildet und bemessen, daß sie beim axialen Anpressen des Spannkörpers 28 über die schräge Innenschulter 26 radial elastisch aufbauchbar oder aufspreizbar und gegen die Innenseite der Anschlußhülse 16 innerhalb der Ausnehmung 18 anpreßbar ist.

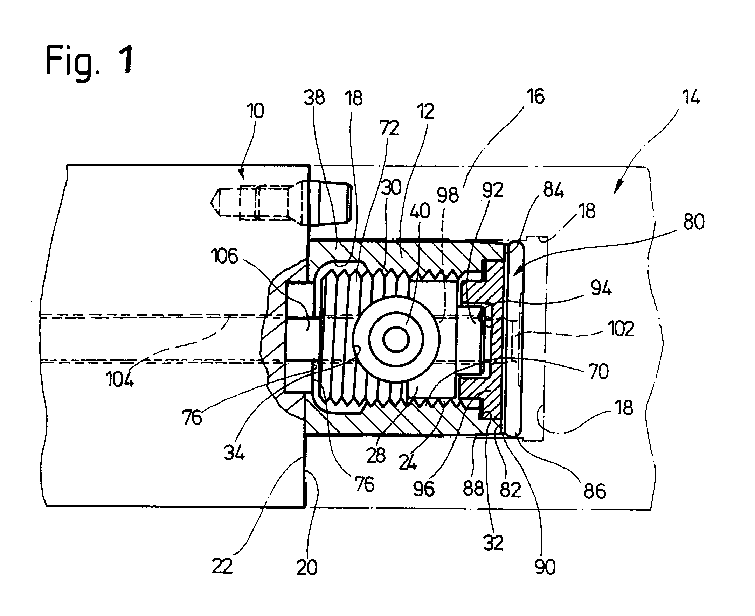

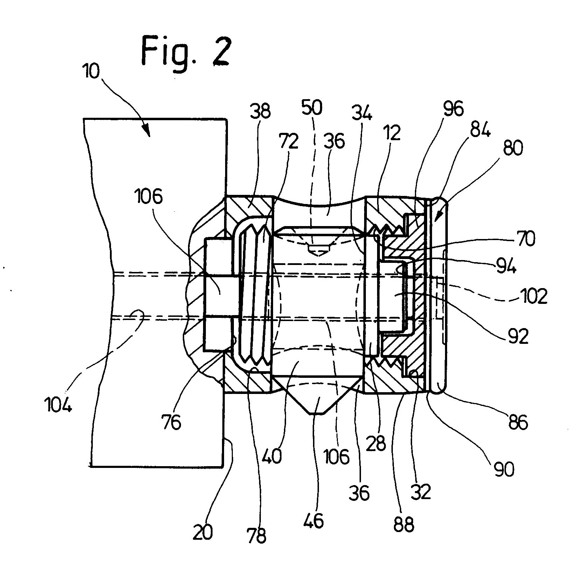

Bei den in den Fig. 1 bis 6 gezeigten Ausführungsbeispielen weist der Hohlschaft 12 im Bereich des Hohlraums 24 ein Innengewinde 70 und der Spannkörper 28 ein in das Innengewinde 70 eingedrehtes Außengewinde 72 auf. Die schräge Innenschulter 26 des Hohlschafts und die gegen die Innenschulter anliegende Spannfläche 30 des Spannkörpers 28 ist dabei durch die gegeneinander anliegenden, schräg zum stirnseitigen Schaftende weisenden Flanken des Innen- bzw. Außengewindes 70,72 gebildet. Der Spannkörper 28 ist mit seinem Außengewinde 72 im wesentlichen spannungsfrei oder lose in das Innengewinde 70 des Hohlschafts 12 eingedreht und mittels eines weiter unten näher beschriebenen Drehsicherungsglieds 40 bzw. 74 gegen Verdrehen gesichert. Die Hohlraumwand 38 ist durch eine in der Nähe des Hohlraumbodens 76 befindliche Freidrehung 78 gezielt geschwächt, so daß sich der Hohlschaft beim Spannvorgang im Bereich der Schaftwurzel, also in der Nähe der Ringfläche 20 aufweitet. Der Hohlraum 24 ist über eine stirnseitige Schaftöffnung von außen her zugänglich, so daß der Spannkörper 28 bei der Montage durch diese Schaftöffnung 80 hindurch in den Hohlraum 24 eingesetzt werden kann.

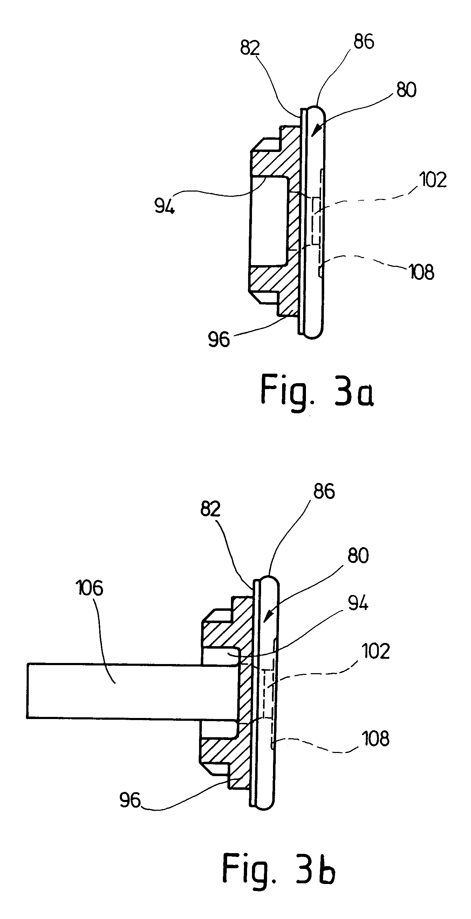

Bei dem in Fig. 1 bis 3a und b gezeigten Ausführungsbeispiel wird der Hohlraum 24 bei montiertem Spannkörper 28 stirnseitig mit einem von außen in das Innengewinde 70 eingeschraubten Schaftdeckel 80 verschlossen, der beim Eindrehen mit seiner Ringschulter 82 gegen eine ringförmige Stirnfläche 84 des Hohlschafts 12 angepreßt wird. Der Schaftdeckel 80 weist am Umfang seiner Ringschulter 82 einen Ringwulst 86 auf, der zusammen mit der konisch zulaufenden Spitze 88 des Hohlschafts 12 im Bereich seiner Rückflanke eine Einführrille 90 begrenzt.

Der Spannkörper 28 weist an seinem stirnseitigen Ende einen axial überstehenden Ansatz 92 auf, der ein Formelement für einen Schraubenschlüssel oder -dreher enthält und der im montierten Zustand in eine entsprechende Ausnehmung 94 auf der Innenseite des Schaftdeckels 80 eingreift. Andererseits ist der Schaftdeckel 80 auf der Innenseite mit einem Stufenansatz 96 versehen, der in eine entsprechende Stufenbohrung im Bereich der Hohlschaftöffnung 32 eingreift.

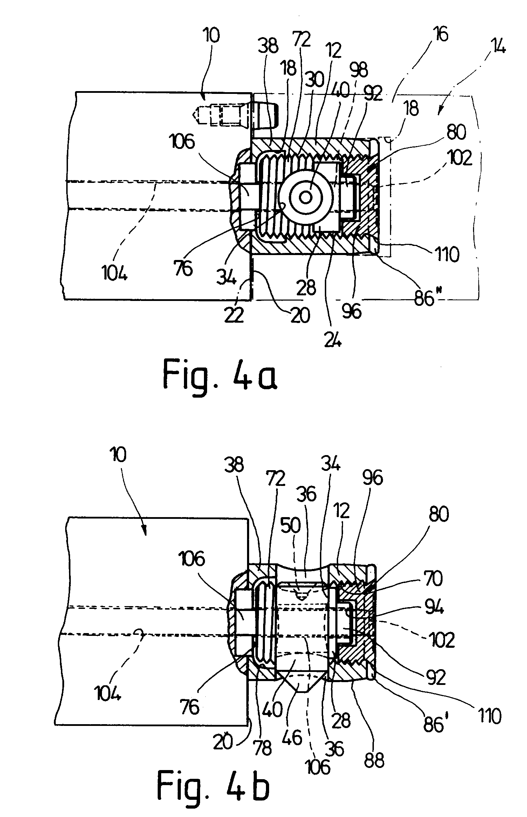

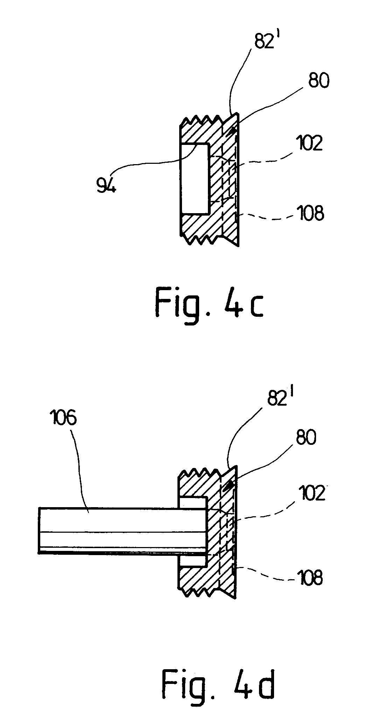

Das Ausführungsbeispiel nach Fig. 4 unterscheidet sich von dem Ausführungsbeispiel nach Fig. 1 bis 3 dadurch, daß der die Einführrille 90 begrenzende Ringwulst 86' am Hohlschaft 12 angeformt ist und daß der mit seinem Außengewinde in das Innengewinde 70 des Hohlschafts 12 eingedrehte Schaftdeckel 80 mit einer konischen Ringschulter 82' gegen eine am Ende des Innengewindes 70 angeformte Kegelsenkung 110 anliegt. Die genannten Unterscheidungsmerkmale haben vor allem Vorteile hinsichtlich des Fertigungsaufwandes: Das Innengewinde 70 kann bis zum Hohlschaftende geführt werden; eine Paßausnehmung zur Aufnahme des Stufenansatzes 96 ist enbehrlich.

Wie insbesondere aus Fig. 1 und 4a zu ersehen ist, enthält der Spannkörper 28 eine axial durchgehende Bohrung 100, durch die ein sich zwischen einer zentralen Öffnung 102 im Deckel und einer auf der Seite des Hohlraumbodens 98 angeordneten Öffnung eines Kühlmittelkanals 104 erstreckendes Kühlmittelrohr 106 hindurchgesteckt ist. Das Kühlmittelrohr 106 kann als getrenntes Teil ausgebildet oder auf der Innenseite des Schaftdeckels 80 befestigt oder angeformt sein (Fig. 3b,4d). Auf der Außenseite weist der Schaftdeckel 80 eine die zentrale Öffnung 102 ringförmig umgebende Vertiefung 108 auf, in die eine im Inneren der Anschlußhülse 16 eingelegte Dichtung mit entsprechendem Profil einführbar ist.

Bei den Ausführungsbeispielen nach Fig. 1 bis 6 weist der Hohlschaft 12 eine zylindrische Mantelfläche und die Anschlußhülse 16 eine entsprechende zylindrische Ausnehmung 18 auf. Abweichend hiervon kann der Hohlschaft 12 eine zum freien Schaftende hin konvergierende kegelförmige Mantelfläche und die Anschlußhülse 16 eine komplementäre kegelförmige Ausnehmung 18 aufweisen. Bei einem weiteren in der Zeichnung nicht dargestellten Ausführungsbeispiel kann der Hohlschaft 12 auch eine doppelzylindrische Mantelfläche mit stirnseitig kleinerem und ringflächenseitig größerem Durchmesser und die Anschlußhülse 16 eine komplementäre doppelzylindrische Ausnehmung mit stirnseitig größerem und rückseitig kleinerem Durchmesser aufweisen.

Bei den in den Fig. 1 bis 4 gezeigten Ausführungsbeispielen enthält der Spannmechanismus einen in einer Querbohrung 34 des Spannkörpers 28 und in Querbohrungen 36 in der Hohlraumwand 38 verschiebbar angeordneten, einstückigen Klemmbolzen 40 sowie zwei in Innengewinden der Anschlußhülse 16 geführte, einander diametral gegenüberliegende Halteschrauben 42,44. Der Klemmbolzen greift mit seinem Außenkonus in einen Innenkonus der benachbarten Halteschraube 42 ein und weist an seinem dem Außenkonus gegenüberliegenden Ende einen Innenkonus zur Aufnahme eines an der Halteschraube 44 angeformten Außenkonus auf. Die Querbohrung 34 des Spannkörpers wird durch die Querbohrungen 36 in der Hohlraumwand 38 hindurch in den bereits montierten Spannkörper 28 eingebracht. Anschließend wird der Klemmbolzen 40 montiert, der dann zugleich die Funktion des Drehsicherungsglieds für den Spannkörper 28 übernimmt.

Zur Herstellung der Verbindung zwischen den beiden Werkzeugteilen 10,14 wird zunächst der Schaft 12 bei ausgedrehter Halteschraube 44 lose in die Ausnehmung 18 der Anschlußhülse 16 eingeführt. Beim anschließenden Eindrehen der Halteschraube 44 in das zugehörige Innengewinde kommt es zunächst zum Anschlag zwischen der Halteschraube 44 und dem Klemmbolzen 40 im Bereich der einander zugewandten Konusflächen. Im weiteren Verlauf des Spannvorgangs wird der Klemmbolzen 40 mit seinem Außenkonus 34 bis zum Anschlag mit der Halteschraube 42 in deren Innenkonus eingeschoben. In diesem Zustand setzt der eigentliche Spannvorgang ein: Die durch die Kalteschrauben 42,44 eingeleiteten Spannkräfte werden zunächst über die konischen Anlageflächen aufgrund des vorhandenen Achsversatzes in eine den Spannkörper 28 mit seiner Spannfläche 30 (Außengewinde 72) gegen die Innenschulter 26 (Innengewinde 70) anpressende Axialkraft umgesetzt. Dadurch wird der Schaft 12 des Werkzeugteils 10 bis zum Anschlag der Ringfläche 20 gegen die Stirnfläche 22 in die Ausnehmung 18 der Anschlußhülse 16 eingezogen. Beim weiteren Anziehen der Halteschraube 44 kommt es zu einer Planflächenverspannung zwischen der Ringfläche 22 und der Stirnfläche 24. Außerdem kommt es bei entsprechender Bemessung der Hohlraumwand 38 durch den axial einwirkenden Spannkörper 28 über die Innenschulter 26 bzw. das Innengewinde 70 zu einer elastischen Aufbauchung oder Aufspreizung der Hohlraumwand 38, die ihrerseits unter Überbrückung des Passungsspiels gegen die Innenseite der Anschlußhülse 16 im Bereich der Ausnehmung 18 angepreßt wird.

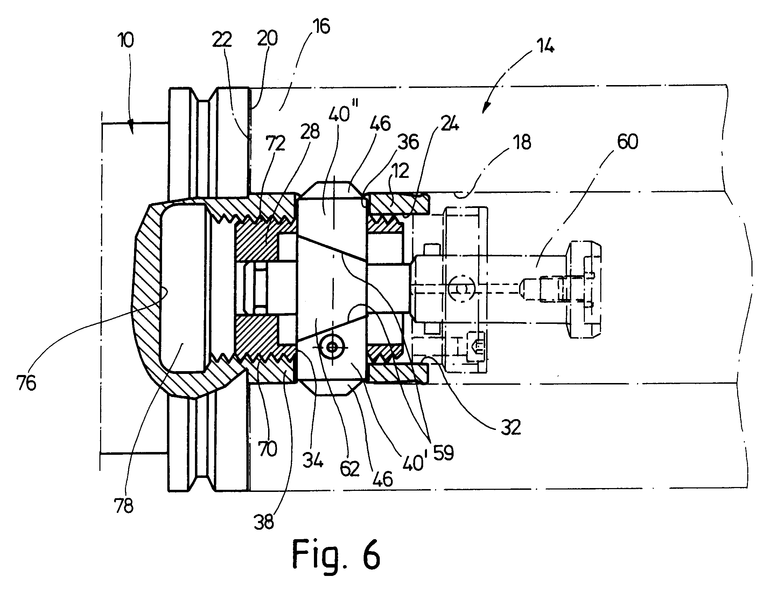

Das in Fig. 6 gezeigte, als Spindelanschluß ausgebildete Ausführungsbeispiel unterscheidet sich von dem Ausführungsbeispiel nach Fig. 1 bis 4 dadurch, daß der Klemmbolzen 40 in zwei in der Querbohrung 34 des Spannkörpers 28 und in den Querbohrungen 36 der Hohlraumwand 38 diametral gegenüberliegende Teile 40',40'' unterteilt ist und daß der Spannvorgang über einen gegen innere Keilflächen 59 der Klemmbolzenteile 40',40'' einwirkenden, über einen Anzugbolzen 60 innerhalb des Spannkörpers 28 axial verschiebbaren Ziehkeil 62 auslösbar ist. Die einen Innenkonus aufweisenden, nicht dargestellten Halteschrauben sind dort zweckmäßig vom Inneren der Ausnehmung 18 her in die Innengewinde der Anschlußhülse 16 eingedreht und bilden eine Aufnahme für die Außenkonusse 46 der Klemmbolzenteile 40',40''. Der Spannvorgang führt zu einer der Fig. 1 bis 4 entsprechenden Kraftübertragung auf die miteinander zu verbindenden Werkzeugteile 10,14, so daß diesbezüglich auf die vorstehenden Ausführungen Bezug genommen werden kann.

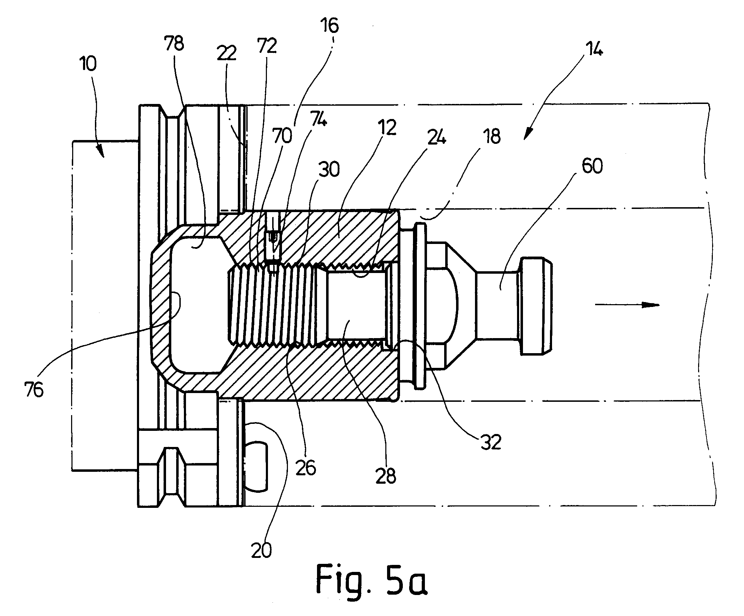

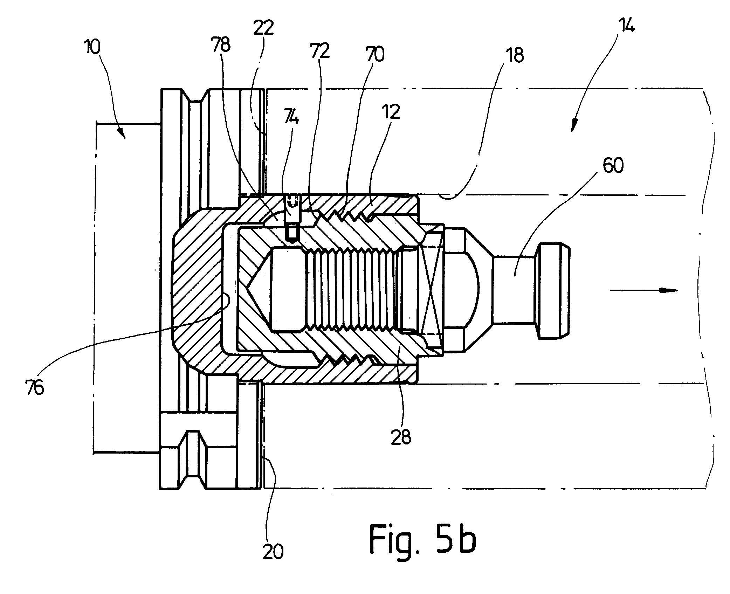

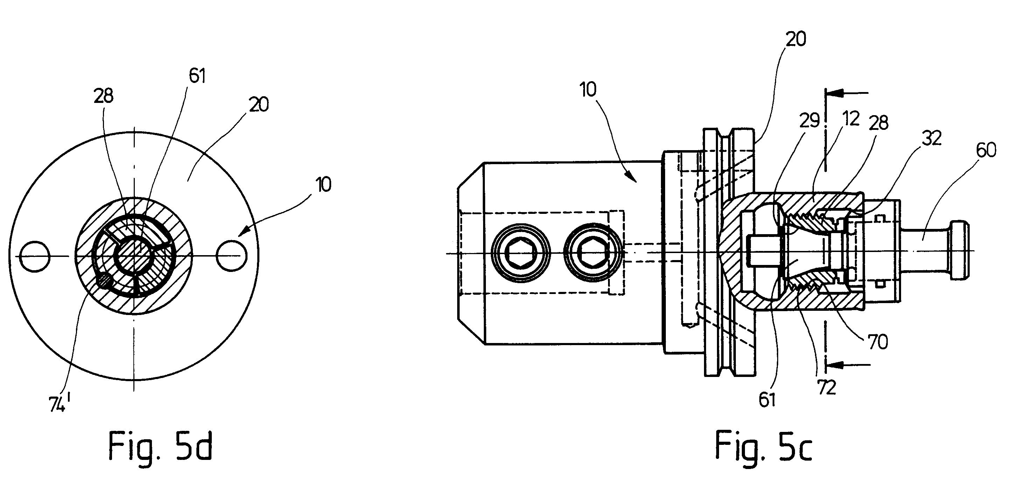

In Fig. 5a bis d sind drei weitere, als Spindelanschluß ausgebildete Werkzeugkupplungen dargestellt, die hinsichtlich des Spannmechanismus gegenüber dem Ausführungsbeispiel nach Fig. 6 dadurch vereinfacht ist, daß auf die Verwendung eines Klemmbolzens 40 verzichtet ist. Der über die stirnseitige Schaftöffnung 32 überstehende Anzugbolzen 60 ist dort starr mit dem Spannkörper 28 verbunden (Fig. 5a), mit diesem verschraubt (Fig. 5b) oder verkeilt (Fig. 5c und d). Als Drehsicherung für den mit seinem Außengewinde 72 lose in das Innengewinde 70 des Hohlschafts 12 eingedrehten Spannkörper 28 ist ein in eine Ausnehmung des Spannkörpers 28 radial (Fig. 5a und b) oder axial (Fig. 5c und d) eingreifender Gewindestift 74,74' vorgesehen. Beim Spannvorgang wird der Spannkörper 28 mit seinem Außengewinde 72 axial über den Anzugbolzen 60 gegen die nach außen weisende Schrägflanke 26 des Innengewindes 70 gezogen und dabei sowohl eine Planflächenverspannung zwischen der Ringfläche 20 und der Stirnfläche 22 als auch eine Radialverspannung durch den sich beim Spannvorgang aufbauchenden oder aufspreizenden Hohlschaft 12 mit der Anschlußhülse 16 erzielt.

Bei dem in Fig. 5c und d gezeigten Ausführungsbeispiel greift der Anzugbolzen 60 mit einem Außenkonus 61 in eine konische Ausnehmung 29 des Spannkörpers 28 ein. Der Spannkörper 28 kann hierzu einteilig, teilweise achsparallel geschlitzt oder, wie in Fig. 5d gezeigt, in mehrere, durch einen nicht dargestellten Spreizring miteinander verbundene Segmente unterteilt sein, um beim Anziehen des Anzugbolzens 60 vorzugsweise in der Nähe der Wurzel des Schafts 12 aufgespreizt werden zu können.

Zusammenfassend ist folgendes festzustellen: Die Erfindung bezieht sich auf eine Vorrichtung zur Verbindung zweier Werkzeugteile mit einem am ersten Werkzeugteil 10 überstehenden Schaft 12 und einer den Schaft 12 an dessen Wurzel umgebenden Ringfläche 20 und mit einer am zweiten Werkzeugteil 14 überstehenden, eine Ausnehmung 18 zur Aufnahme des Schafts 12 und eine beim Spannvorgang gegen die Ringfläche 20 anpreßbare Stirnfläche 22 aufweisenden Anschlußhülse 16. Um neben der Planflächenverspannung auch eine selbstzentrierende Radialverspannung des Schafts 12 innerhalb der Anschlußhülse 16 zu erzielen, weist der Schaft 12 einen zum stirnseitigen Schaftende hin axial offenen Hohlraum 24 und einen im Hohlraum 24 axial verschiebbar angeordneten Spannkörper 28 auf. Der Spannkörper 20 ist mit einem Außengewinde 72 in ein Innengewinde 70 des Hohlschafts lose eingedreht und gegen Verdrehen gesichert. Die Hohlraumwand 38 ist so bemessen, daß sie beim axialen Anpressen des Spannkörpers 28 über die zur Schaftöffnung 32 hin schrägen Gewindeflanken 26,30 radial elastisch aufbauchbar oder aufspreizbar und gegen die Innenseite der Anschlußhülse 16 anpreßbar ist.

## Patentansprüche

1. Vorrichtung zur Verbindung zweier Werkzeugteile mit einem am ersten Werkzeugteil (10) überstehenden Schaft (12) und einer den Schaft (12) an dessen Wurzel umgebenden Ringfläche (20) und mit einer am zweiten Werkzeugteil (14) überstehenden, eine Ausnehmung (18) zur Aufnahme des Schafts (12) und eine bei einem Spannvorgang gegen die Ringfläche (20) anpreßbare Stirnfläche (22) aufweisenden Anschlußhülse (16), wobei der Schaft (12) einen Hohlraum (24) und einen im Hohlraum angeordneten Spannkörper (28) aufweist, wobei der Hohlraum (24) durch mindestens eine schräg zum stirnseitigen Schaftende weisende Innenschulter (26) begrenzt ist, gegen die eine Spannfläche (30) des Spannkörpers (28) beim Spannvorgang anpreßbar ist, und wobei die Hohlraumwand (38) so bemessen ist, daß sie beim axialen Anpressen des Spannkörpers (28) über die schräge Innenschulter (26) radial elastisch aufbauchbar oder aufspreizbar und gegen die Innenseite der Anschlußhülse (16) anpreßbar ist, **dadurch gekennzeichnet**, daß der Schaft (12) im Bereich des Hohlraums (24) ein Innengewinde (70) und der Spannkörper (28) ein in das Innengewinde (70) des Schafts eingedrehtes Außengewinde (72) aufweisen, und daß die Innenschulter (26) des Schafts (12) und die gegen die Innenschulter anliegende Spannfläche (30) des Spannkörpers (28) durch gegeneinander anliegende, schräg zum stirnseitigen Schaftende weisende Flanken des Innen- bzw. Außengewindes (70,72) gebildet sind.

2. Vorrichtung nach Anspruch 1, **dadurch gekennzeichnet**, daß der Spannkörper (28) mit seinem Außengewinde (72) im wesentlichen spannungsfrei oder lose in das Innengewinde (70) des Schafts (12) eingedreht und in diesem mittels eines Drehsicherungsglieds (40,74,74') gegen ein Verdrehen formschlüssig gesichert ist.

3. Vorrichtung nach Anspruch 1 oder 2, **dadurch gekennzeichnet,** daß der Spannkörper (28) und die Hohlraumwand (38) miteinander fluchtende Querbohrungen (34,26) aufweisen, daß in den Querbohrungen (34,26) ein an seinen Enden einen Innen- bzw. Außenkonus (50,46) aufweisender, ein- oder mehrteiliger Klemmbolzen (40) verschiebbar angeordnet ist, daß die Anschlußhülse (16) mit zwei in einander diametral gegenüberliegenden Innengewinden geführten, einen nach dem Hülseninneren weisenden, dem Innen- bzw. Außenkonus (50,46) des Klemmbolzens (40) zugeordneten Außen- bzw. Innenkonus aufweisenden, beim Spannvorgang mit dem Klemmbolzen (40) verspannbaren Halteschrauben (42,44) versehen ist und daß der Klemmbolzen (40) und die Halteschrauben (42,44) einen beim Spannvorgang sowohl das Anpressen des Spannkörpers (28) mit seiner Spannfläche (30) gegen die Innenschulter (26) des Schafts (12) als auch den Einzug des Schafts (12) in die Ausnehmung (18) und das gegenseitige Anpressen der Ringfläche (20) und der Stirnfläche (22) bewirkenden Achsversatz aufweisen.

4. Vorrichtung nach Anspruch 3, **dadurch gekennzeichnet**, daß die Querbohrung (34) im Spannkörper einen kleineren Durchmesser als die Querbohrungen in der Hohlraumwand (36) aufweist.

5. Vorrichtung nach Anspruch 3 oder 4, **dadurch gekennzeichnet,** daß der Klemmbolzen (40) zwei in der Querbohrung (34) des Spannkörpers (28) einander diametral gegenüberliegende und durch die Querbohrungen (36) in der Hohlraumwand (38) hindurchgreifende Klemmbolzenteile (40',40'') sowie einen zwischen den Klemmbolzenteilen angeordneten, axial durch den Spannkörper (28) und mit einem Anzugbolzen (60) durch eine stirnseitige Schaftöffnung (32) hindurchgreifenden, axial verschiebbaren, mit Keilflächen (59) gegen komplementäre Keilflächen der Klemmbolzenteile (40',40'') anliegenden Ziehkeil (62) aufweist.

6. Vorrichtung nach einem der Ansprüche 3 bis 5, **dadurch gekennzeichnet**, daß das Drehsicherungsglied durch den durch die Querbohrungen (34,26) hindurchgreifenden Klemmbolzen (40) gebildet ist.

7. Vorrichtung nach Anspruch 1 oder 2, **dadurch gekennzeichnet**, daß der Spannkörper (28) einen durch eine stirnseitige Schaftöffnung (32) hindurchgreifenden und axial über diesen überstehenden Anzugbolzen (60) trägt.

8. Vorrichtung nach Anspruch 7, **dadurch gekennzeichnet**, daß der Spannkörper (28) mit dem Anzugbolzen (60) vorzugsweise mit diesem verschraubt ist oder in Anzugrichtung mit diesem vorzugsweise in der Nähe der Schaftwurzel aufspreizbar verkeilt ist.

9. Vorrichtung nach Anspruch 7 oder 8, **dadurch gekennzeichnet,** daß der Anzugbolzen (60) mit einem Außenkonus (61) in eine in Spannrichtung konvergierende konische Ausnehmung (29) des vorzugsweise achsparallel geschlitzten oder segmentartig geteilten Spannkörpers (28) eingreift.

10. Vorrichtung nach einem der Ansprüche 3 bis 9, **dadurch gekennzeichnet,** daß die Querbohrung (34) quer zu den Längsseitenflächen des im Querschnitt langgestreckten Spannkörpers (28) ausgerichtet ist.

11. Vorrichtung nach einem der Ansprüche 2 bis 10, **dadurch gekennzeichnet**, daß das Drehsicherungsglied durch einen im wesentlichen radial in die Hohlraumwand (38) eingedrehten, mit seiner Spitze in eine Ausnehmung des Spannkörpers (28) eingreifenden Gewindestift (74) gebildet ist.

12. Vorrichtung nach einem der Ansprüche 1 bis 11, **dadurch gekennzeichnet**, daß das Innengewinde (70) und/oder das Außengewinde (72) als Spitzgewinde, Trapezgewinde, Sägegewinde oder Rundgewinde ausgebildet sind.

13. Vorrichtung nach einem der Ansprüche 1 bis 12, **dadurch gekennzeichnet,** daß der Schaft (12) mindestens eine eine Wandschwächung bildende radiale Ausnehmung oder Freidrehung (78) aufweist.

14. Vorrichtung nach Anspruch 13, **dadurch gekennzeichnet**, daß die Ausnehmung oder Freidrehung (78) im Hohlrauminneren angeordnet ist.

15. Vorrichtung nach Anspruch 13 oder 14, **dadurch gekennzeichnet**, daß die Ausnehmung oder Freidrehung (78) in der Nähe der Schaftwurzel angeordnet ist.

16. Vorrichtung nach einem der Ansprüche 13 bis 15, **dadurch gekennzeichnet**, daß die Ausnehmung oder Freidrehung (78) im Bereich des Innengewindes (70) angeordnet ist.

17. Vorrichtung nach einem der Ansprüche 1 bis 16, **dadurch gekennzeichnet**, daß der Hohlraum (24) über eine stirnseitige Schaftöffnung (32) von außen her zugänglich ist.

18. Vorrichtung nach Anspruch 17, **dadurch gekennzeichnet,** daß die Schaftöffnung (32) durch einen Schaftdeckel (80) verschlossen ist.

19. Vorrichtung nach Anspruch 18, **dadurch gekennzeichnet,** daß das Innengewinde (70) des Schafts (12) sich bis in die Nähe der Schaftöffnung erstreckt und daß der Schaftdeckel (80) mit einem Außengewinde (72) in das Innengewinde (70) eingedreht und mit einer ebenen oder konischen Ringschulter (82,82') gegen einen ringförmige Stirnfläche (84) oder Kegelsenkung (110) des Schafts (12) angepreßt ist.

20. Vorrichtung nach Anspruch 18 oder 19, **dadurch gekennzeichnet**, daß der Schaftdeckel (80) mit einem axialen Stufenansatz (96) in eine entsprechende Stufenbohrung des Schafts (12) eingreift.

21. Vorrichtung nach einem der Ansprüche 18 bis 20, **dadurch gekennzeichnet**, daß der Schaftdeckel (80) oder der Schaft (12) durch einen Umfangswulst (86, 86') begrenzt ist, dessen Außendurchmesser geringfügig kleiner als der Schaftdurchmesser in der Nähe der Schaftwurzel ist.

22. Vorrichtung nach einem der Ansprüche 18 bis 21, **dadurch gekennzeichnet**, daß der Schaft (12) einen sich zur Stirnfläche (84,10) hin konisch verjüngenden Schaftabschnitt (88) aufweist, und daß der Außendurchmesser des Schaftdeckels (80) bzw. des Schafts (12) im Bereich des Umfangswulsts (86) größer als der Schaftdurchmesser im Bereich der Stirnfläche (84) ist.

23. Vorrichtung nach einem der Ansprüche 1 bis 22, **dadurch gekennzeichnet**, daß das Außengewinde (72) des Spannkörpers (28) teilweise oder abschnittsweise freigedreht ist.

24. Vorrichtung nach Anspruch 23, **dadurch gekennzeichnet,** daß das Außengewinde (72) des Spannkörpers (28) an seinem der Schaftstirnseite zugewandten Ende freigedreht ist.

25. Vorrichtung nach einem der Ansprüche 1 bis 24, **dadurch gekennzeichnet**, daß der Spannkörper (28) an seinem stirnseitigen Ende ein Formelement (92) für den Ansatz eines Schraubenschlüssels oder -drehers aufweist.

26. Vorrichtung nach einem der Ansprüche 18 bis 25, **dadurch gekennzeichnet**, daß der Spannkörper (28) an seinem stirnseitigen Ende einen axial überstehenden Ansatz (92) für den Eingriff in eine entsprechende Ausnehmung (94) des Schaftdeckels (80) aufweist.

27. Vorrichtung nach einem der Ansprüche 1 bis 26, **dadurch gekennzeichnet**, daß der Spannkörper (28) eine axial durchgehende Kühlmittel- oder Kühlmittelrohrbohrung (98) aufweist.

28. Vorrichtung nach Anspruch 27, **gekennzeichnet durch** ein sich zwischen einer vorzugsweise zentralen Öffnung (102) im Schaftdeckel (80) und einer Öffnung (104) im wurzelseitigen Hohlraumboden (76) erstreckendes und durch eine Axialbohrung (98) im Spannkörper und gegebenenfalls eine Queraussparung im Klemmbolzen (40) hindurchgreifendes Kühlmittelrohr (106).

29. Vorrichtung nach Anspruch 28, **dadurch gekennzeichnet**, daß das Kühlmittelrohr (106) am Schaftdeckel (80) befestigt, vorzugsweise angeformt ist.

30. Vorrichtung nach Anspruch 28 oder 29, **dadurch gekennzeichnet**, daß das Kühlmittelrohr (106) zwischen Schaftdeckel (80) und wurzelseitigem Hohlraumboden (76) dichtend eingespannt ist.

31. Vorrichtung nach einem der Ansprüche 28 bis 30, **dadurch gekennzeichnet**, daß der Schaftdeckel (80) eine die zentrale Öffnung (102) außenseitig ringförmig umgebende Vertiefung (108) aufweist.

32. Vorrichtung nach einem der Ansprüche 3 bis 31, **dadurch gekennzeichnet**, daß der Schaft (12) mindestens einen zur Querbohrung (36) in der Hohlraumwand (38) hin offenen Wandschlitz aufweist.

33. Vorrichtung nach Anspruch 32, **dadurch gekennzeichnet,** daß der Wandschlitz von der Querbohrung (36) aus parallel oder schräg zur Schaftachse in Richtung freies Schaftende verläuft und zum freien Schaftende hin geschlossen ist.

34. Vorrichtung nach Anspruch 32 oder 33, **dadurch gekennzeichnet,** daß der Wandschlitz von der Querbohrung (36) aus parallel oder schräg zur Schaftachse in Richtung Ringfläche (20) verläuft und zur Ringfläche hin geschlossen ist.

35. Vorrichtung nach einem der Ansprüche 1 bis 34, **dadurch gekennzeichnet**, daß der Schaft (12) in seiner Hohlraumwand (38) mindestens zwei einander paarweise diametral gegenüberliegende, zum stirnseitigen Ende hin randoffene Aussparungen aufweist.

36. Vorrichtung nach einem der Ansprüche 1 bis 35, **dadurch gekennzeichnet**, daß die einander zugewandten Ring- und Stirnflächen (20,22) zueinander komplementäre Nuten und Nutensteine zur formschlüssigen Drehmitnahme aufweisen.

37. Vorrichtung nach einem der Ansprüche 1 bis 36, **dadurch gekennzeichnet**, daß der Schaft (12) eine zylindrische Mantelfläche und die Anschlußhülse (16) eine komplementäre zylindrische Ausnehmung (18) aufweist.

38. Vorrichtung nach einem der Ansprüche 1 bis 37, **dadurch gekennzeichnet**, daß der Schaft (12) eine zum freien Schaftende hin konvergierende kegelförmige Mantelfläche und die Anschlußhülse (16) eine komplementäre kegelförmige Ausnehmung aufweist.

39. Vorrichtung nach einem der Ansprüche 1 bis 38, **dadurch gekennzeichnet**, daß der Schaft (12) eine doppelzylindrische Mantelfläche mit stirnseitig kleinerem und ringflächenseitig größerem Durchmesser und die Anschlußhülse (16) eine komplementäre doppelzylindrische Ausnehmung mit stirnseitig größerem und rückseitig kleinerem Durchmesser aufweist.

## Claims

1. A device for connecting two tool parts comprising a shaft (12) which projects from a first tool-part (10) and an annular surface (20) surrounding the base of the shaft (12), and comprising a coupling sleeve (16) which projects from a second tool part (14) and which has a recess (18) for receiving the shaft (12) and an end surface (22) which is pressed against the annular surface (20) during a clamping operation, wherein the shaft (12) has a cavity (24) and a clamping body (28) which is positioned within the cavity, wherein the cavity (24) is delimited by at least one inner shoulder (26) which is inclined toward the front face end of the shaft, against which inner shoulder (26) a clamping surface (30) of the clamping body (28) can be pressed during the clamping operation, and wherein the cavity wall (38) is dimensioned such that it is radially elastically bulgeable or expandable by the inclined inner shoulder (26) when being pressed axially against the clamping body (28) and that it can be pressed against the inside of the coupling sleeve (16), **characterized in that** the shaft (12) has an internal thread (70) in the region of the cavity (24) and the clamping body (28) has an external thread (72) screwed into the internal thread (70) of the shaft, and in that the inner shoulder (26) of the shaft (12) and the clamping surface (30) of the clamping body (28) which rests against the inner shoulder are formed by flanks of the internal or external thread (70,72), which flanks rest against one another and are inclined toward the front face end of the shaft.

2. The device of claim 1, **characterized in that** the clamping body (28) is screwed loosely or essentially without tension into the internal thread (70) of the shaft (12) with its external thread (72) and is positively secured against rotation in said shaft by means of a rotation locking member (40,74,74').

3. The device of claim 1 or 2, **characterized in that** the clamping body (28) and the cavity wall (38) have crossbores (34,26) which are aligned with respect to one another, that a one part or multi-part clamping bolt (40) which at its ends has an inner or outer cone (50,46) is movably positioned in the crossbores (34,26), that the coupling sleeve (16) has two holding screws (42,44) which are guided in diametrically opposed internal threads and which have an inner or outer cone which is directed toward the inside of the sleeve and assigned to the inner or outer cone (50,46) of the clamping bolt (40), and which are strain-clamped with the clamping bolt (40) during the clamping operation, and that the clamping bolt (40) and the holding screws (42,44) are axially misaligned so that during the clamping operation the clamping of the clamping body (28) with its clamping surface (30) against the inner shoulder (26) of the shaft (12) as well as the pulling of the shaft (12) into the recess (18) and the mutual pressing-together of the annular surface (20) and the end surface (22) are effected.

4. The device of claim 3, **characterized in that** the cross bore (34) in the clamping body has a smaller diameter than the crossbores in the cavity wall (36).

5. The device of claim 3 or 4, **characterized in that** the clamping bolt (46) has two clamping bolt parts (40',40'') which are diametrically opposed to one another in the crossbore (34) of the clamping body (28) and which extend through the crossbores (36) in the cavity wall (38), as well as an axially movable sliding wedge (62) which is positioned between the clamping bolt parts and which extends axially through the clamping body (28) and with a tightening bolt (60) through a front face shaft opening (32), and which rests with wedge surfaces (59) against complementary wedge surfaces of the clamping bolt parts (40',40'').

6. The device of one of claims 3 to 5, **characterized in that** the rotation locking member is formed by the clamping bolt (40) which extends through the crossbores (34,26).

7. The device of claim 1 or 2, **characterized in that** the clamping body (28) carries a tightening bolt (60) which extends through a front face shaft opening (32) and which axially projects over said clamping body.

8. The device of claim 7, **characterized in that** the clamping body (28) with the tightening bolt (60) is preferably screwed to same or is expandably wedged with same in the direction of tightening preferably near the base of the shaft.

9. The device of claim 7 or 8, **characterized in that** the tightening bolt (60) engages with an outer cone (61) into a conical recess (29) of the clamping body (28) which is preferably slotted axially parallel or divided into segments, which recess (29) converges in the direction of clamping.

10. The device of one of claims 3 to 9, **characterized in that** the crossbore (34) is aligned transversely with respect to the longitudinal side surfaces of the clamping body (28) which has an elongated cross section.

11. The device of one of claims 2 to 10, **characterized in that** the rotation locking member is formed by a threaded pin (74) which is screwed essentially radially into the cavity wall (38) and the tip of which extends into a recess of the clamping body (28).

12. The device of one of claims 1 to 11, **characterized in that** the internal thread (70) and/or the external thread (72) are formed to be a sharp thread, a trapezoidal thread, a buttress thread, or a round thread.

13. The device of one of claims 1 to 12, **characterized in that** the shaft (12) has at least one radial recess or turned surface (78) which forms a thin part of the wall.

14. The device of claim 13, **characterized in that** the recess or turned surfaces (78) is positioned on the inside of the cavity.

15. The device of claim 13 or 14, **characterized in that** the recess or turned surface (78) is positioned near the base of the shaft.

16. The device of one of claims 13 to 15, **characterized in that** the recess or turned surface (78) is positioned in the region of the internal thread (70).

17. The device of one of claims 1 to 16, **characterized in that** the cavity (24) can be accessed from the outside by way of a shaft opening (32) at the front face side.

18. The device of claim 17, **characterized in that** the shaft opening (32) is closed off by a shaft lid (80).

19. The device of claim 18, **characterized in that** the internal thread (70) of the shaft (12) extends into the vicinity of the shaft opening and that the shaft lid (80) is screwed into the internal thread (70) with an external thread (72) and pressed against an annular end surface (84) or conical depression (110) of the shaft (12) with a plane or conical annular shoulder (82,82').

20. The device of claim 18 or 19, **characterized in that** the shaft lid (80) engages a corresponding stepped bore of the shaft (12) with an axial stepped shoulder (96).

21. The device of one of claims 18 to 20, **characterized in that** the shaft lid (80) or the shaft (12) is delimited by a circumferential bulge (86,86'), the outer diameter of which is slightly smaller than the diameter of the shaft near the base of the shaft.

22. The device of one of claims 18 to 21, **characterized in that** the shaft (12) has a shaft section (88) which is conically tapered toward the end surface (84,10), and that the outer diameter of the shaft lid (80) or the shaft (12) in the region of the circumferential bulge (86) is larger than the shaft diameter in the region of the end surface (84).

23. The device of one of claims 1 to 22, **characterized in that** the external thread (72) of the clamping body (28) is faced partially or in sections.

24. The device of claim 23, **characterized in that** the external thread (72) of the clamping body (28) is faced at its end which faces the end surface of the shaft.

25. The device of one of claims 1 to 24, **characterized in that** the clamping body (28) has a formed element (92) for applying a wrench or screwdriver at its front face end.

26. The device of one of claims 18 to 25, **characterized in that** the clamping body (28) has at its front face end an axially protruding shoulder (92) for the engagement with a corresponding recess (94) of the shaft lid (80).

27. The device of one of claims 1 to 26, **characterized in that** the clamping body (28) has an axially continuous bore (98) for a cooling medium or a cooling medium pipe.

28. The device of claim 27, **characterized by** a cooling medium pipe (106) which extends from a preferably central opening (102) in the shaft lid (80) to an opening (104) in the cavity bottom (76) on the base side and which penetrates an axial bore (98) in the clamping body and, if necessary, a transverse recess in the clamping bolt (40).

29. The device of claim 28, **characterized in that** the cooling medium pipe (106) is fastened to, preferably formed on, the shaft lid (80).

30. The device of claim 28 or 29, **characterized in that** the cooling medium pipe (106) is clamped between the shaft lid (80) and the cavity bottom (76) on the base side in a sealing manner.

31. The device of one of claims 28 to 30, **characterized in that** the shaft lid (80) has a recess (108) which annularly surrounds on the outside the central opening (102).

32. The device of one of claims 3 to 31**, characterized in that** the shaft (12) has at least one wall slot which is opened toward the crossbore (36) in the cavity wall (38).

33. The device of claim 32, **characterized in that** the wall slot extends parallel or inclined with respect to the shaft axis from the crossbore toward the free end of the shaft and that it is closed toward the free end of the shaft.

34. The device of claim 32 or 33, **characterized in that** the wall slot extends parallel or inclined with respect to the shaft axis from the crossbore (36) toward the annular surface (20) and that it is closed toward the annular surface.

35. The device of one of claims 1 to 34, **characterized in that** the shaft (12) has in its cavity wall (38) at least two recesses which are diametrically opposed to one another in pairs and which are open-edged with respect to the front face end.

36. The device of one of claims 1 to 35, **characterized in that** the mutually opposed annular and end faces (20,22) have mutually complementary grooves and groove stones for a positive locking rotational drive.

37. The device of one of claims 1 to 36, **characterized in that** the shaft (12) has a cylindrical outer surface and the coupling sleeve (16) has a complementary cylindrical recess (18).

38. The device of one of claims 1 to 37, **characterized in that** the shaft (12) has a conical outer surface which converges toward the free end of the shaft and the coupling sleeve (16) has a complementary comical recess.

39. The device of one of claims 1 to 38, **characterized in that** the shaft (12) has a double-cylindrical outer surface with a smaller diameter at the front face side and a larger diameter at the annular surface side and the coupling sleeve (16) has a complementary double-cylindrical recess with a larger diameter at the front face side and a smaller diameter at the back side.

## Revendications

1. Dispositif pour l'accouplement de deux éléments d'outil, comprenant une tige (12) dépassant du premier élément d'outil (10) et une surface annulaire (20) entourant la tige (12) à la racine de celle-ci, et un manchon de raccordement (16) dépassant du second élément d'outil (14) et présentant un évidement (18) pour la réception de la tige (12) ainsi qu'une surface frontale (22) qui peut être appliquée lors du serrage contre la surface annulaire (20), la tige (12) comportant une cavité (24) et un corps de serrage (28) placé dans la cavité, la cavité (24) étant délimitée par au moins un épaulement intérieur (26) orienté en oblique vers l'extrémité de la tige située du côté frontal et contre lequel peut être appliquée, lors du serrage, une surface de serrage (30) du corps de serrage (28), et la paroi (38) de la cavité étant dimensionnée de telle façon que, lors de l'application axiale du corps de serrage (28), elle peut être élargie ou écartée élastiquement dans le sens radial par l'intermédiaire de l'épaulement intérieur incliné (26) et pressée contre la surface intérieure du manchon de raccordement (16), **caractérisé en** ce que la tige (12) présente dans la région de la cavité (24) un filetage intérieur (70) et que le corps de serrage (28) comporte un filetage extérieur (72) vissé dans le filetage intérieur (70) de la tige, et que l'épaulement intérieur (26) de la tige (12) et la surface de serrage (30) du corps de serrage (28) appliquée contre l'épaulement intérieur sont formés par des flancs du filetage intérieur et respectivement extérieur (70, 72) appliqués les uns contre les autres et inclinés vers l'extrémité de la tige située du côté frontal.

2. Dispositif selon la revendication 1, caractérisé en ce que le corps de serrage (28) est vissé avec son filetage extérieur (72) sensiblement sans contrainte ou de manière lâche dans le filetage intérieur (70) de la tige (12) et bloqué en rotation, à engagement positif, dans celui-ci au moyen d'un organe de blocage en rotation (40, 74, 74').

3. Dispositif selon la revendication 1 ou 2, caractérisé en ce que le corps de serrage (28) et la paroi (38) de la cavité présentent des alésages transversaux (34, 26) alignés, que dans les alésages transversaux (34, 26) est disposé de manière mobile un boulon de serrage (40) d'un seul tenant ou en plusieurs parties muni à ses extrémités d'un cône intérieur et respectivement d'un cône extérieur (50, 46), que le manchon de raccordement (16) est muni de deux vis de retenue (42, 44) guidées dans des filetages intérieurs diamétralement opposés, d'un boulon de serrage (40) dirigé vers l'intérieur du manchon, comportant un cône extérieur et respectivement un cône intérieur associés aux cônes intérieur et respectivement extérieur (50, 46) du boulon de serrage (40) et pouvant être solidarisées lors du serrage avec le boulon de serrage (40), et que le boulon de serrage (40) et les vis de retenue (42, 44) présentent un décalage axial qui provoque, lors du serrage, aussi bien l'application du corps de serrage (28) avec sa surface de serrage (30) contre l'épaulement intérieur (26) de la tige (12) que la rentrée de la tige (12) dans l'évidement (18) et l'application mutuelle de la surface annulaire (20) et de la surface frontale (22).

4. Dispositif selon la revendication 3, caractérisé en ce que l'alésage transversal (34) dans le corps de serrage présente un diamètre inférieur à celui des alésages transversaux dans la paroi (36) de la cavité.

5. Dispositif selon la revendication 3 ou 4, caractérisé en ce que le boulon de serrage (40) comporte deux éléments de boulon de serrage (40', 40'') diamétralement opposés dans l'alésage transversal (34) du corps de serrage (28) et traversant les alésages transversaux (36) dans la paroi de cavité (38), ainsi qu'une clavette coulissante (62) disposée entre les éléments de boulon de serrage, traversant axialement le corps de serrage (28) et, avec un boulon de tirage (60), une ouverture de tige (32) située du côté frontal, déplaçable dans le sens axial et appliquée avec des surfaces coniques (59) contre des surfaces coniques complémentaires des éléments de boulon de serrage (40', 40'').

6. Dispositif selon l'une des revendications 3 à 5, caractérisé en ce que l'organe de blocage en rotation est formé par le boulon de serrage (40) qui traverse les alésages transversaux (34, 26).

7. Dispositif selon la revendication 1 ou 2, caractérisé en ce que le corps de serrage (28) porte un boulon de tirage (60) qui traverse une ouverture de tige (32) située du côté frontal et dépasse ledit corps de serrage dans le sens axial.

8. Dispositif selon la revendication 7, caractérisé en ce que le corps de serrage (28) avec le boulon de tirage (60) est de préférence vissé avec ce dernier ou claveté de manière écartable, de préférence à proximité de la racine de la tige.

9. Dispositif selon la revendication 7 ou 8, caractérisé en ce que le boulon de tirage (60) s'engage avec un cône extérieur (61) dans un évidement conique (29), convergeant dans la direction de serrage, du corps de serrage (28) fendu de préférence parallèlement à l'axe ou divisé en segments.

10. Dispositif selon l'une des revendications 3 à 9, caractérisé en ce que l'alésage transversal (34) est orienté transversalement aux surfaces des grands côtés du corps de serrage (28) présentant une section transversale allongée.

11. Dispositif selon l'une des revendications 2 à 10, caractérisé en ce que l'organe de blocage en rotation est constitué par une vis sans tête (74) vissée sensiblement radialement dans la paroi (38) de la cavité et s'engageant avec sa pointe dans un évidement du corps de serrage (28).

12. Dispositif selon l'une des revendications 1 à 11, caractérisé en ce que le filetage intérieur (70 et/ou le filetage extérieur (72) sont conformés en filets triangulaires, filets trapézoïdaux, filets en dent de scie ou filets ronds.

13. Dispositif selon l'une des revendications 1 à 12, caractérisé en ce que la tige (12) présente au moins un évidement ou dégagement au tour (78) radial formant un affaiblissement de paroi.

14. Dispositif selon la revendication 13, caractérisé en ce que l'évidement ou le dégagement au tour (78) est dispose à l'intérieur de la cavité.

15. Dispositif selon la revendication 13 ou 14, caractérisé en ce que l'évidement ou le dégagement au tour (78) est disposé à proximité de la racine de la tige.

16. Dispositif selon l'une des revendications 13 à 15, caractérisé en ce que l'évidement ou le dégagement au tour (78) est disposé dans la région du filetage intérieur (70).

17. Dispositif selon l'une des revendications 1 à 16, caractérisé en ce que la cavité (24) est accessible de l'extérieur par l'intermédiaire d'une ouverture de tige (32) située du côté frontal.

18. Dispositif selon la revendication 17, caractérisé en ce que l'ouverture de tige (32) est obturée par un bouchon de tige (80).

19. Dispositif selon la revendication 18, caractérisé en ce que le filetage intérieur (70) de la tige (12) s'étend jusqu'à proximité de l'ouverture de tige, et que le bouchon de tige (80) est vissé avec un filetage extérieur (72) dans le filetage intérieur (70) et pressé avec un épaulement annulaire plan ou conique (82, 82') contre une surface frontale annulaire (84) ou un logement conique (110) de la tige (12).

20. Dispositif selon la revendication 18 ou 19, caractérisé en ce que le bouchon de tige (80) s'engage avec un embout étagé (96) axial dans un alésage étagé correspondant de la tige (12).

21. Dispositif selon l'une des revendications 18 à 20, caractérisé en ce que le bouchon de tige (80) ou la tige (12) est délimité par un bourrelet périphérique (86, 86') dont le diamètre extérieur est légèrement plus petit que le diamètre de la tige à proximité de la racine de la tige.

22. Dispositif selon l'une des revendications 18 à 21, caractérisé en ce que la tige (12) comporte une section de tige (88) qui se rétrécit de manière conique en direction de la surface frontale (84, 10), et que le diamètre extérieur du bouchon de tige (80) et respectivement de la tige (12) dans la région du bourrelet périphérique (86) est plus grand que le diamètre de la tige dans la région de la surface frontale (84).

23. Dispositif selon l'une des revendications 1 à 22, caractérisé en ce que le filetage extérieur (72) du corps de serrage (28) est partiellement ou par sections dégagé au tour.

24. Dispositif selon la revendication 23, caractérisé en ce que le filetage extérieur (72) du corps de serrage (28) est dégagé au tour à son extrémité tournée vers le côté frontal de la tige.

25. Dispositif selon l'une des revendications 1 à 24, caractérisé en ce que le corps de serrage (28) présente à son extrémité côté frontal un élément profilé (92) pour l'application d'une clé ou d'un tournevis.

26. Dispositif selon l'une des revendications 18 à 25, caractérisé en ce que le corps de serrage (28) présente à son extrémité côté frontal un emoout (92) en saillie axiale pour l'engagement dans un évidement (94) correspondant du bouchon de tige (80).

27. Dispositif selon l'une des revendications 1 à 26, caractérisé en ce que le corps de serrage (28) comporte un alésage axial continu (98) pour le passage d'un réfrigérant ou d'un conduit de réfrigérant.

28. Dispositif selon la revendication 27, caractérisé en ce qu'il comprend un conduit de réfrigérant (106) qui s'étend entre une ouverture (102), de préférence centrale, dans le bouchon de tige (80) et une ouverture (104) dans le fond (76) côté racine de la cavité et qui traverse un alésage axial (98) dans le corps de serrage et éventuellement un alésage transversal dans le boulon de serrage (40).

29. Dispositif selon la revendication 28, caractérisé en ce que le conduit de réfrigérant (106) est fixé, de préférence conformé, sur le bouchon de tige (80).

30. Dispositif selon la revendication 28 ou 29, caractérisé en ce que le conduit de réfrigérant (106) est enserré de manière étanche entre le bouchon de tige (80) et le fond (76) côté racine de la cavité.

31. Dispositif selon l'une des revendications 28 à 30, caractérisé en ce que le bouchon de tige (80) présente un creux (108) qui entoure extérieurement l'ouverture centrale (102) de manière concentrique.

32. Dispositif selon l'une des revendications 3 à 31, caractérisé en ce que la tige (12) présente au moins une fente de paroi ouverte en direction de l'alésage transversal (36) dans la paroi (38) de la cavité.

33. Dispositif selon la revendication 32, caractérisé en ce que la fente de paroi s'étend, à partir de l'alésage transversal (36), parallèlement ou en oblique par rapport à l'axe de la tige en direction de l'extrémité libre de la tige et qu'elle est fermée en direction de l'extrémité libre de la tige.

34. Dispositif selon la revendication 32 ou 33, caractérise en ce que la fente de paroi s'étend, a partir de l'alésage transversal (36), parallèlement ou en oblique par rapport à l'axe de la tige en direction de la surface annulaire (20) et qu'elle est fermée en direction de la surface annulaire.

35. Dispositif selon l'une des revendications 1 à 34, caractérisé en ce que la tige (12) comporte dans sa paroi de cavité (38) au moins deux évidements diamétralement opposés par paires et à bord ouvert en direction de l'extrémité côté frontal.

36. Dispositif selon l'une des revendications 1 à 35, caractérisé en ce que les surfaces annulaire et frontale (20, 22) tournées l'une vers l'autre comportent des rainures et coulisseaux complémentaires pour l'entraînement en rotation à engagement positif.

37. Dispositif selon l'une des revendications 1 à 36, caractérisé en ce que la tige (12) présente une surface latérale cylindrique et que le manchon de raccordement (16) comporte un évidement cylindrique (18) complémentaire.

38. Dispositif selon l'une des revendications 1 à 37, caractérisé en ce que la tige (12) présente une surface latérale conique convergeant vers l'extrémité libre de la tige, et que le manchon de raccordement (16) comporte un évidement conique complémentaire.

39. Dispositif selon l'une des revendications 1 à 38, caractérisé en ce que la tige (12) présente une surface latérale bicylindrique avec un diamètre plus petit du côté frontal et plus grand du côté de la surface annulaire, et que le manchon de raccordement (16) comporte un évidement bicylindrique complémentaire avec un diamètre plus grand du côté frontal et plus petit du côté arrière.
